# EUROPÄISCHE PATENTSCHRIFT

(11) **EP 2 711 505 B1**
(45) Veröffentlichungstag und Bekanntmachung des Hinweises auf die Patenterteilung: **10.02.2016**
(21) Anmeldenummer: 13184894.7
(22) Anmeldetag: 18.09.2013
(51) Int. Cl.: F01D 25/18, F16D 1/10, F02C 7/32, F16H 1/22, F16H 57/04

(54) **Hilfsgerätegetriebevorrichtung**
Auxiliary transmission device
Dispositif d'engrenage d'appareils auxiliaires

(30) Priorität: 20.09.2012 DE 102012018603
(43) Veröffentlichungstag der Anmeldung: 26.03.2014
(73) Patentinhaber: Rolls-Royce Deutschland Ltd & Co KG, 15827 Blankenfelde-Mahlow (DE)
(72) Erfinder: Beier, Jürgen, 15732 Schulzendorf (DE)
(74) Vertreter: Kronthaler, Wolfgang N.K.

(56) Entgegenhaltungen:
- WO-A1-2012/105482
- DE-A1-102009 052 595
- JP-A- H07 190 176
- US-A- 3 889 780

## Beschreibung

Die Erfindung betrifft eine Hilfsgerätegetriebevorrichtung mit einer in ein Gehäuse eingebundenen Welle, welche zumindest in einem seitlichen Endbereich mit einem Hilfsgerät verbindbar ist, gemäß der im Oberbegriff des Patentanspruches 1 näher definierten Art.

Aus der Praxis sind Hilfsgerätegetriebevorrichtungen für Flugzeugtriebwerke bekannt, welche mehrere jeweils mit einem Hilfsgerät koppelbare Wellen aufweisen. Die als Hohlwellen ausgeführten Wellen weisen hierzu in einem seitlichen Endbereich eine Geradinnenverzahnung auf, über welche ein Hilfsgerät mit der Welle koppelbar ist. Um eine ausreichende Schmierung der Innenverzahnung zu gewährleisten, ist es bekannt über eine an einem dem mit dem Hilfsgerät koppelbaren Endbereich der Welle entgegengesetzten Wellenende angeordnete Öldüse Öl zur Schmierung der Innenverzahnung in die Welle einzuführen. Das Öl wird über verschiedene Kammern zu der Geradverzahnung gefördert. Ebenfalls ist es bekannt eine Öldüse durch eine Bohrung in einer Seitenwand der Welle zu führen und die Geradverzahnung über diese Bohrung mit Öl zu versorgen.

Das Vorsehen der Öldüse und hierfür erforderlicher Leitungen ist allerdings nachteilhafterweise aufwändig und teuer.

Die gattungsgemäße JP H07-190 176 A zeigt eine Vorrichtung, bei der eine eine Innenverzahnung aufweisende Welle mit einem ein Außengewinde aufweisenden Aggregat gekoppelt ist. Zur Schmierung eines Innenraums der Hohlwelle ist in einem ersten angetriebenen Teil eine Ölpassage vorgesehen. In einer seitlichen Abdeckung ist eine mit der Ölpassage zusammenwirkende Ölpassage gebildet,

über welche im Bereich eines Gehäuses befindliches Öl in Richtung der Innenverzahnung gefördert wird.

Aus der US 3,889,780 A ist eine Hilfsgerätegetriebeeinrichtung bekannt, die eine hohl ausgeführte Antriebswelle aufweist. Mittels der Antriebswelle ist einenends eine mit einem Generator wirkverbundene Welle antreibbar, wobei die Welle hierzu eine Außenverzahnung aufweist, die mit einer Innenverzahnung der Antriebswelle zusammenwirkt. In vergleichbarer Weise treibt die Antriebswelle andernends eine mit einem Anlasser verbundene Welle an, wobei diese Welle hierzu wiederum eine Außenverzahnung aufweist, die mit einer Innenverzahnung der Antriebwelle in Eingriff steht. Im Innenraum der Antriebswelle sind Pfropfen angeordnet, um zu verhindern, dass sich im Bereich der Antriebswelle vorliegendes Öl in einen mittleren Teil der Antriebswelle bewegt.

Der vorliegenden Erfindung liegt die Aufgabe zugrunde eine Hilfsgerätegetriebevorrichtung der eingangs genannten Art zur Verfügung zu stellen, welche einfach und kostengünstig aufgebaut ist.

Erfindungsgemäß wird diese Aufgabe mit einer Hilfsgerätegetriebevorrichtung mit den Merkmalen des Patentanspruches 1 gelöst.

Es wird eine Hilfsgerätegetriebevorrichtung mit einer in ein Gehäuse eingebundenen Welle vorgeschlagen, welche zumindest in einem seitlichen Endbereich mit einem Hilfsgerät verbindbar ist, wobei die Welle zumindest in dem seitlichen Endbereich als Hohlwelle mit einer Innenverzahnung ausgebildet ist. Zur Schmierung der Innenverzahnung im Bereich des Gehäuses ist wenigstens eine Leiteinrichtung vorgesehen, welche zur Führung von im Bereich des Gehäuses vorliegendem Hydraulikfluid insbesondere ausschließlich unter Einwirkung von Schwerkraft in Richtung wenigstens einer in der Welle vorgesehenen Öffnung ausgebildet ist.

Erfindungsgemäß weist die Welle an einem mit dem Hilfsgerät koppelbaren seitlichen Endbereich abgewandten seitlichen Endbereich eine weitere Innenverzahnung auf, über welche die Welle mit einem weiteren Hilfsgerät koppelbar ist.

Damit ist ein gesamter Bauraumbedarf der Hilfsgerätegetriebevorrichtung quer zur Erstreckungsrichtung der Mittelachse der Welle reduziert, da für das weitere Hilfsgerät keine separate Welle vorgesehen werden muss.

Die erfindungsgemäße Hilfsgerätegetriebevorrichtung ist auch einfach und kostengünstig aufgebaut, da zur Versorgung der Innenverzahnung mit Hydraulikfluid keine Öldüse und beispielsweise in ein Getriebegehäuse eingegossene Ölleitungen nötig sind. Durch die insbesondere ausschließlich gravitationsgetriebene Einführung von Hydraulikfluid in die Welle kann ein Ölverbrauch gegenüber einer Ausführung mit einer Öldüse deutlich gesenkt werden, da Hydraulikfluid im Wesentlichen nur während eines Stillstands der Welle in einen Welleninnenraum eingeführt wird. Im Betriebszustand der Welle gelangt über die Leiteinrichtung in Richtung der Öffnung gefördertes Hydraulikfluid durch die Rotation der Welle nicht in den Innenraum der Welle, da das Hydraulikfluid durch die Zentrifugalkraft von einer durch die Leiteinrichtung in den Bereich der Öffnung beförderten Position eine Kraft nach außen erfährt, welche eine Führung des Hydraulikfluids durch die wenigstens eine Öffnung verhindert.

Da zur Schmierung der Innenverzahnung nur sehr geringe Hydraulikfluidmengen benötigt werden, reicht ein im Bereich des Gehäuses der Hilfsgerätegetriebeeinrichtung und insbesondere im Bereich der Leiteinrichtung vorhandener Hydraulikfluidvorrat gegebenenfalls bereits zur Versorgung der Innenverzahnung aus.

Ein weiterer Vorteil einer erfindungsgemäßen Hilfsgerätegetriebevorrichtung ist, dass im Unterschied zu Ausführungen mit einer Öldüse ein geringerer Anteil von Hydraulikfluid aus der Welle abgeführt werden muss und hierdurch die Effizienz des Systems steigt. Außerdem ist durch die geringen Mengen an Hydraulikfluid in der Welle eine Austrittsmenge von Hydraulikfluid aus der Welle im Falle eines Dichtungsverlusts seitens des Hilfsgeräts begrenzt.

Die Leiteinrichtung kann derart ausgebildet sein, dass sie das Hydraulikfluid entweder direkt zu der Öffnung leitet oder die Leiteinrichtung zu der Öffnung in der Art beabstandet angeordnet ist, dass von der Leiteinrichtung geführtes Hydraulikfluid durch die Schwerkraft in einen Bereich der Öffnung tropft bzw. fließt.

Bei einer vorteilhaften Ausführung einer erfindungsgemäßen Hilfsgerätegetriebevorrichtung ist es vorgesehen, dass die Leiteinrichtung integral mit dem Gehäuse ausgebildet ist. Eine derartige Leiteinrichtung kann beispielsweise bei der Herstellung des meist ein Gussbauteil darstellenden Gehäuses auf einfache Weise mit dem Gehäuse ausgebildet werden. Alternativ hierzu kann die Leiteinrichtung auch als ein separates Bauteil ausgebildet sein, welches über Befestigungsmittel an dem Gehäuse angeordnet ist.

Besonders einfach ist die Leiteinrichtung ausgebildet, wenn sie eine in das Gehäuse integrierte Rinne darstellt, mittels welcher im Bereich des Gehäuses vorliegendes Hydraulikfluid zu der Öffnung der Welle gefördert wird.

Um insbesondere für den Fall der zu der Öffnung beabstandeten Anordnung der Leiteinrichtung eine Hydraulikzufuhr über die Leiteinrichtung in die Welle besonders zuverlässig zu gestalten, kann die wenigstens eine Öffnung in einer in radialer Richtung umlaufenden Nut der Welle angeordnet sein.

Wenn im Bereich der Leiteinrichtung ein zur Aufnahme von Hydraulikfluid vorgesehener Behälter angeordnet ist, welcher in mit Hydraulikfluid gefülltem Zustand zur insbesondere kontinuierlichen Abgabe von Hydraulikfluid an die wenigstens eine Leiteinrichtung ausgebildet ist, kann sichergestellt werden, dass über die Leiteinrichtung immer ausreichend Hydraulikfluid in Richtung der Öffnung der Welle gefördert wird. Der Behälter kann beispielsweise über eine im Bereich der Leiteinrichtung für andere Verbraucher vorgesehene Öldüse mit Hydraulikfluid versorgt werden.

Bei einer vorteilhaften Ausführung einer erfindungsgemäßen Hilfsgerätegetriebevorrichtung kann die Öffnung zur Führung von Hydraulikfluid in eine erste Kammer der Welle ausgebildet sein, welche wiederum zur Führung von Hydraulikfluid im Betrieb der Welle in Richtung der Innenverzahnung ausgebildet ist.

Die erste Kammer kann bei einer einfachen Ausführung der Hilfsgerätegetriebevorrichtung in eingebautem Zustand des Hilfsgeräts einerseits von dem Hilfsgerät und/oder einer Dichtungseinrichtung und andererseits zumindest bereichsweise von einer Hydraulikfluidführungseinrichtung begrenzt sein.

Die Hydraulikfluidführungseinrichtung kann zur Führung des Hydraulikfluids von der Öffnung in die erste Kammer ausgebildet sein, so dass sichergestellt ist, dass durch die Öffnung in die Welle eintretendes Hydraulikfluid vollständig in die erste Kammer der Welle gelangt.

Bei einer einfachen Ausführung einer erfindungsgemäßen Hilfsgerätegetriebevorrichtung ist die Hydraulikfluidführungseinrichtung in der Art eines zumindest im Bereich der Öffnung offenen hohlen Rings ausgebildet, wobei eine der Mittelachse der Welle zugewandte Fläche der Hydraulikfluidführungseinrichtung in Richtung der ersten Kammer in Richtung der Mittelachse der Welle geneigt ist und die Hydraulikfluidführungseinrichtung in einem der ersten Kammer zugewandten Bereich eine Durchlassöffnung für Hydraulikfluid aufweist. Die Hydraulikfluidführungseinrichtung ist insbesondere im Wesentlichen rotationssymmetrisch ausgebildet, so dass sie entsprechend einfach und kostengünstig hergestellt und in der Welle angeordnet werden kann.

Um Hydraulikfluid von der ersten Kammer der Welle abführen zu können, kann die Hydraulikfluidführungseinrichtung wenigstens eine Durchlassöffnung aufweisen, welche zur Führung von Hydraulikfluid von der ersten Kammer in eine insbesondere in einem der ersten Kammer abgewandten Bereich der Hydraulikfluidführungseinrichtung vorgesehene zweite Kammer der Welle ausgebildet ist, wenn eine in der ersten Kammer befindliche Hydraulikfluidmenge bei stillstehender Welle eine bestimmte Hydraulikfluidgrenzmenge überschreitet. Die Hydraulikfluidführungseinrichtung kann hierzu beispielsweise im Bereich einer Mittelachse der Welle eine Durchgangsbohrung aufweisen. Alternativ hierzu kann die Hydraulikfluidführungseinrichtung insbesondere in einem der ersten Kammer zugewandten Bereich einen den Querschnitt der Welle im Wesentlichen verschließenden Bereich aufweisen, welcher im Bereich der Mittelachse der Welle wenigstens eine Öffnung aufweist. Hierdurch kann auf einfache Weise sichergestellt werden, dass über die Leiteinrichtung und die wenigstens eine Öffnung in die Welle eingeführtes Hydraulikfluid in die erste Kammer der Welle gelangt. Bei der erfindungsgemäßen Hilfsgerätegetriebevorrichtung sind zur ausreichenden Versorgung der Innenverzahnung lediglich zwei Kammern in der Hilfsgerätegetriebewelle nötig. Die zweite Kammer kann bei einer alternativen Ausführung der Erfindung auch von der Hydraulikfluidführungseinrichtung selbst gebildet werden, wobei Hydraulikfluid über eine in der Hydraulikfluidführungseinrichtung vorgesehene Durchflussöffnung bei einem Überschreiten eines Grenzpegelstands in einen Hohlraum der Hydraulikfluidführungseinrichtung einströmt.

Um Hydraulikfluid auf einfache Weise aus der Welle abführen zu können, kann im Bereich der zweiten Kammer wenigstens eine Hydraulikfluidauslassöffnung vorgesehen sein.

Zur Schmierung der weiteren Innenverzahnung kann eine weitere Leiteinrichtung vorgesehen sein, welche im Bereich des Gehäuses vorliegendes Hydraulikfluid unter Einwirkung von Schwerkraft in Richtung wenigstens einer weiteren in der Welle vorgesehenen Öffnung führt.

Weiterhin ist vorteilhafterweise wenigstens eine weitere Hydraulikfluidführungseinrichtung vorgesehen, über welche Hydraulikfluid von der weiteren Öffnung der Welle in eine dritte Kammer der Welle führbar ist. Die weitere Leiteinrichtung, die weitere Öffnung, die weitere Hydraulikfluidführungseinrichtung und die weiteren Elemente zur Versorgung des weiteren Hilfsgeräts mit Hydraulikfluid können gemäß den oben beschriebenen Ausführungen bau- und funktionsgleich zu den entsprechenden Elementen zur Versorgung des Hilfsgeräts ausgebildet sein.

Bei einer vorteilhaften Ausführung einer erfindungsgemäßen Hilfsgerätegetriebevorrichtung kann es vorgesehen sein, dass die weitere Hydraulikfluidführungseinrichtung wenigstens eine weitere Durchlassöffnung aufweist, welche zur Führung von Hydraulikfluid von der dritten Kammer in die in einem der dritten Kammer abgewandten Bereich der weiteren Hydraulikfluidführungseinrichtung vorgesehene zweite Kammer der Welle ausgebildet ist, wenn eine in der dritten Kammer befindliche Hydraulikfluidmenge bei stillstehender Welle eine bestimmte Hydraulikfluidgrenzmenge überschreitet. Vorteilhafterweise ist zur Abführung von Hydraulikfluid aus der Welle auch bei einer mit zwei Hilfsgeräten verbindbaren Welle lediglich eine zweite Kammer erforderlich.

Sowohl die in den Patentansprüchen angegebenen Merkmale als auch die in den nachfolgenden Ausführungsbeispielen der erfindungsgemäßen Hilfsgerätegetriebevorrichtung angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Ausführungsformen des erfindungsgemäßen Verfahrens ergeben sich aus den Patentansprüchen und den nachfolgend unter Bezugnahme auf die Zeichnung prinzipmäßig beschriebenen Ausführungsbeispielen.

Es zeigt:
- Fig. 1: eine stark schematisierte Längsschnittansicht eines Strahltriebwerkes mit einer im Wesentlichen in radialer Richtung außerhalb eines Nebenstromkanals des Strahltriebwerks angeordneten Hilfsgerätegetriebevorrichtung;
- Fig. 2: eine vereinfachte Schnittdarstellung eines Ausschnitts der Hilfsgerätegetriebevorrichtung der Fig. 1 mit einer Welle, welche mit einem Hilfsgerät verbindbar ist; und
- Fig. 3: eine vereinfachte Schnittdarstellung eines Ausschnitts der Hilfsgerätegetriebevorrichtung der Fig. 1 mit einer alternativ ausgeführten Welle, welche mit zwei Hilfsgeräten verbindbar ist.

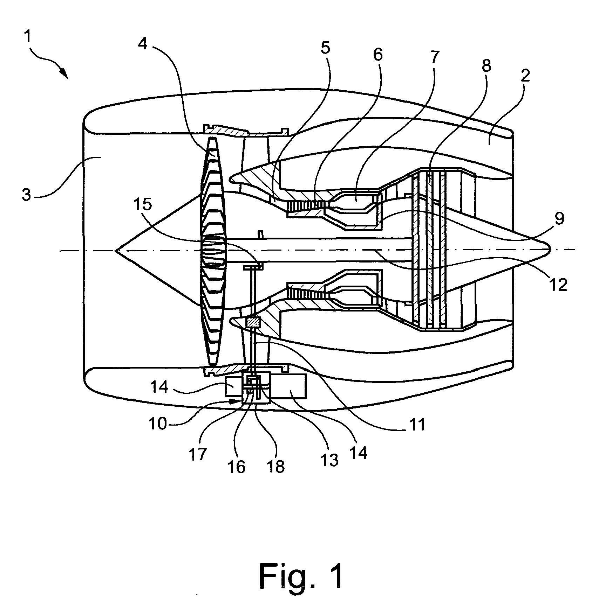

In der Fig. 1 ist ein Strahltriebwerk 1 für ein Flugzeug gezeigt, welches einen Nebenstromkanal 2 und einen Einlaufbereich 3 aufweist, wobei sich an den Einlaufbereich 3 stromab ein Bläser 4 in an sich bekannter Art und Weise anschließt. Wiederum stromab des Bläsers 4 teilt sich der Fluidstrom im Strahltriebwerk 1 in einen Nebenstrom und einen Kernstrom auf, wobei der Nebenstrom durch den Nebenstromkanal 2 und der Kernstrom in einen Triebwerkskern 5 strömt, der wiederum in an sich bekannter Art und Weise mit einer Verdichtereinrichtung 6, einem Brenner 7, einer zum Antrieb des Bläsers 4 vorgesehenen Niederdruckturbine 8 und einer zum Antrieb der Verdichtereinrichtung 6 vorgesehenen Hochdruckturbine 9 ausgeführt ist.

Weiterhin ist eine schematisch dargestellte Hilfsgerätegetriebevorrichtung 10 ersichtlich, welche im Wesentlichen in radialer Richtung außerhalb des Nebenstromkanals 2 angeordnet ist und eine Antriebswelle 11 umfasst, über welche die Hilfsgerätegetriebevorrichtung 10 mit einer zentralen Triebwerkswelle 12 verbunden ist. Die Antriebswelle 11 ist vorliegend mittels einer Kegelradverzahnung 15 mit einer Hochdruckwelle der Triebwerkswelle 12 wirkverbunden, welche im Betriebszustand des Strahltriebwerks 1 mit höherer Drehzahl rotiert als eine koaxial dazu angeordnete Niederdruckwelle, an welche der Bläser 4 angebunden ist.

Die Antriebswelle 11 treibt über Zahnradpaarungen 13 eine Hilfsgerätegetriebewelle 16 der Hilfsgerätegetriebevorrichtung 10 an, welche wiederum über ein Zahnrad 17 weitere - in der Fig. 1 nicht näher ersichtliche - Hilfsgerätegetriebewellen antreibt. Die Hilfsgerätegetriebewellen 16 sind mit verschiedenen Hilfsaggregaten bzw. Hilfsgeräten 14, wie beispielsweise einer Brennstoffpumpe, einer Hydraulikpumpe, einem Entlüfter, einem Generator oder einem pneumatischer Starter, koppelbar und in einem gemeinsamen Gehäuse 18 angeordnet.

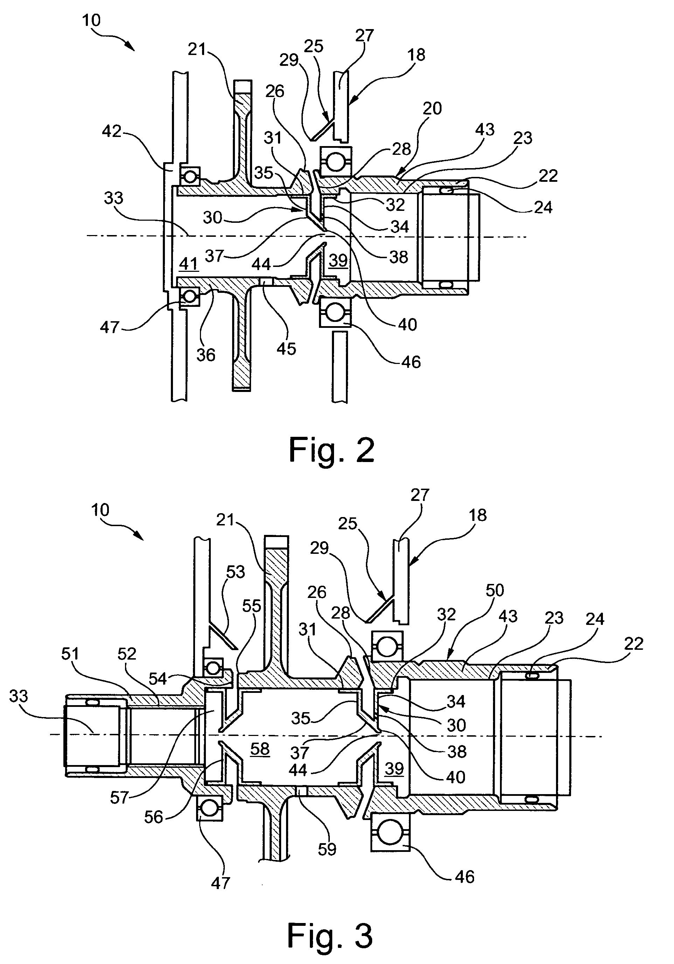

In Fig. 2 ist eine Hilfsgerätegetriebewelle 20 der Hilfsgerätegetriebevorrichtung 10 gezeigt, welche über ein Zahnrad 21 direkt oder indirekt mit der Hilfsgerätegetriebewelle 16 zusammenwirkt.

Die Hilfsgerätegetriebewelle 20 ist hier insgesamt als Hohlwelle ausgebildet und weist in einem ersten Endbereich 22 eine Innenverzahnung 23 auf, über welche ein mit einer korrespondierenden Außenverzahnung ausgebildetes Hilfsgerät 14 mit der Hilfsgerätegetriebewelle 20 koppelbar ist. Über eine hier schematisch angedeutete und in dem ersten Endbereich 22 angeordnete Dichteinrichtung 24 ist der Endbereich 22 der Hilfsgerätegetriebewelle 20 in eingebautem Zustand des Hilfsgeräts 14 gegen einen Austritt von Hydraulikfluid, insbesondere Öl, abgedichtet.

Um die Geradverzahnung 23 mit Hydraulikfluid zu versorgen und zu schmieren, ist eine schwerkraftgetriebene Hydraulikfluidversorgung vorgesehen. Hierbei wird sich beispielsweise als Sprühnebel und an Wänden des Gehäuses 18 befindliches Hydraulikfluid über eine Leiteinrichtung 25 ausschließlich durch Einwirkung von Schwerkraft in Richtung einer in einer umlaufenden Nut 26 der Hilfsgerätegetriebewelle 20 befindlichen Öffnung 28 und durch diese in einen Innenraum der Hilfsgerätegetriebewelle 20 geführt. Alternativ hierzu können auch mehrere insbesondere als Bohrungen ausgebildete Öffnungen versetzt zueinander in der Nut angeordnet sein.

Insbesondere in einem Bereich einer Wand 27 des Gehäuses 18 oberhalb der Leiteinrichtung 25 kann bei einer alternativen Ausführung der Erfindung ein Behälter angeordnet sein, welcher beispielsweise von einer zur Versorgung des Zahnrads 21 mit Hydraulikfluid vorgesehen Öldüse mit Hydraulikfluid befüllt wird und die Leiteinrichtung 25 insbesondere kontinuierlich mit Hydraulikfluid versorgt. Über einen derartigen Behälter kann sichergestellt werden, dass ausreichend Hydraulikfluid über die Leiteinrichtung 25 in Richtung der Öffnung 28 gefördert wird.

Die Leiteinrichtung 25 ist vorliegend in Form einer in das Gehäuse 18 eingegossenen Nase ausgebildet, welche aufgrund der Schwerkraft an einer Wand 27 des Gehäuses 18 herablaufendes Hydraulikfluid in einen Bereich oberhalb der Bohrung bzw. Öffnung 28 leitet. Hydraulikfluid tropft von einer Spitze 29 der Leiteinrichtung 25 durch die Schwerkraft in einen Bereich der Nut 26 und der Öffnung 28. Bei stillstehender Hilfsgerätegetriebewelle 20, bzw. wenn sich die Hilfsgerätegetriebewelle 20 mit einer geringen Drehzahl dreht, wird das Hydraulikfluid ebenfalls schwerkraftgetrieben durch die Öffnung 28 geführt. Im Betriebszustand der Hilfsgerätegetriebewelle 20 dreht sich die Hilfsgerätegetriebewelle 20 mit einer Drehzahl, welche auf sich im Bereich der Nut 26 der Hilfsgerätegetriebewelle 20 befindliches Hydraulikfluid eine Zentrifugalkraft ausübt, welche verhindert, dass Hydraulikfluid durch die Öffnung in die Hilfsgerätegetriebewelle 20 eindringt. Somit findet ein Eintritt von Hydraulikfluid in die Hilfsgerätegetriebewelle 20 über die Öffnung 28 im Wesentlichen im Stillstand der Hilfsgerätegetriebewelle 20 statt.

In der Hilfsgerätegetriebewelle 20 ist im Bereich der Öffnung 28 eine im Wesentlichen rotationssymmetrisch aufgebaute Hydraulikfluidführungseinrichtung 30 angeordnet, welche im Wesentlichen ein hohler Ring mit einer im Bereich der Öffnung 28 offenen Seite ist. Die Hydraulikfluidführungseinrichtung 30 weist im Querschnitt neben der Öffnung 28 an einer Innenwandung der Hilfsgerätegetriebewelle 20 anordenbare Schenkel 31, 32 und sich von diesen jeweils in Richtung einer Mittelachse 33 der Hilfsgerätegetriebewelle 20 erstreckende Begrenzungswände 34, 35 auf, von denen eine erste Begrenzungswand 34 dem ersten Endbereich 22 der Hilfsgerätegetriebewelle 20 und eine zweite Begrenzungswand 35 dem ersten Endbereich 22 abgewandten zweiten Endbereich 36 der Hilfsgerätegetriebewelle 20 zugewandt ist. Die Begrenzungswände 34, 35 sind, wiederum im Querschnitt betrachtet, in einem der Mittelachse 33 zugewandten Bereich von einer Innenwand 37 begrenzt, welche geneigt ausgeführt ist, d. h. die Innenwand 37 ragt im Bereich der ersten Begrenzungswand 34 weiter in Richtung der Mittelachse 33 als im Bereich der zweiten Begrenzungswand 35.

Über die Öffnung 28, welche eine ausreichende Größe zur Durchführung von Hydraulikfluid aufweist, drainiert Hydraulikfluid bei stillstehender Hilfsgerätegetriebewelle 20 in die Hilfsgerätegetriebewelle 20, tropft auf die Innenwand 37 der Hydraulikfluidführungseinrichtung 30 und wird durch eine in einem der Innenwand 37 zugewandten Bereich der ersten Begrenzungswand 34 vorgesehene Durchlassöffnung 38 in eine erste Kammer 39 der Hilfsgerätegetriebewelle 20 geführt, welche einerseits im eingebauten Zustand des Hilfsgeräts 14 von dem Hilfsgerät 14 und der Dichteinrichtung 24 und andererseits von der ersten Begrenzungswand 34 der Hydraulikfluidführungseinrichtung 30 begrenzt ist.

Um sicherzustellen, dass über die Öffnung 28 in die Hilfsgerätegetriebewelle 20 geführtes Hydraulikfluid in die erste Kammer 39 gelangt, ist in einem Schnittbereich der ersten Begrenzungswand 34 und der Innenwand 37 der Hydraulikfluidführungseinrichtung 30 eine Abtropfkante 40 vorgesehen. Die Abtropfkante 40 verhindert, dass Hydraulikfluid von der Innenwand 37 der Hydraulikfluidführungseinrichtung 30 direkt in eine zweite Kammer 41 der Hilfsgerätegetriebewelle 20 eintritt, welche im zweiten Endbereich 36 der Hilfsgerätegetriebewelle 20 von einem Gehäuseelement 42 und andererseits von der zweiten Begrenzungswand 35 und der Innenwand 37 der Hydraulikfluidführungseinrichtung 30 begrenzt ist. Eine Abdichtung zwischen dem Gehäuseelement 42 und der Hilfsgerätegetriebewelle 20 ist nicht erforderlich.

Alternativ zu der Abtropfkante 40 kann die erste Begrenzungswand abgesehen von der Durchlassöffnung 38 im Wesentlichen durchgängig sein, d. h. im Wesentlichen den gesamten Querschnitt der Hilfsgerätegetriebewelle 20 abschließen.

Das in die erste Kammer 39 geführte Hydraulikfluid verteilt sich durch die Zentrifugalkraft im Betrieb der Hilfsgerätegetriebewelle 20 an einer Innenwand 43 der ersten Kammer 39 und wird von dort zur Schmierung der Geradverzahnung 23 befördert und entlang der Geradverzahnung 23 verteilt.

Wenn eine in der ersten Kammer 39 befindliche Hydraulikmenge eine Hydraulikfluidgrenzmenge bei stillstehender Hilfsgerätegetriebewelle 20 überschreitet bzw. ein Grenzpegelstand überschritten wird, fließt Hydraulikfluid von der ersten Kammer 39 durch eine von der Abtropfkante 40 der Hydraulikfluidführungseinrichtung 30 gebildete Durchtrittsöffnung 44 in die zweite Kammer 41. Das in der ersten Kammer 39 befindliche Hydraulikfluid fließt in die zweite Kammer 41, wenn ein in der ersten Kammer 39 vorliegender Hydraulikpegelstand eine von der ersten Begrenzungswand 34 der Hydraulikfluidführungseinrichtung 30 gebildete Schulter übersteigt. Über eine in der zweiten Kammer 41 vorgesehene Austrittsbohrung 45 wird Hydraulikfluid aus der Hilfsgerätegetriebewelle 20 abgeführt.

Alternativ zu der Austrittsbohrung 45 kann auch vorgesehen sein, dass die Hydraulikfluidführungseinrichtung 30 eine weitere Durchlassöffnung entsprechend der Durchlassöffnung 38 aufweist, welche gegenüber der Durchlassöffnung 38 um etwa 180° versetzt in der Hydraulikfluidführungseinrichtung 30 angeordnet ist. Erreicht und übersteigt ein in der ersten Kammer 39 vorliegender Hydraulikpegelstand die weitere Durchlassöffnung, tritt durch diese Hydraulikfluid in den hohlen Innenbereich der Hydraulikfluidführungseinrichtung 30 ein und kann über eine zu der Öffnung 28 um etwa 180° in der Hilfsgerätegetriebewelle 20 versetzt weitere Öffnung aus der Hilfsgerätegetriebewelle 20 abgeführt werden.

Über die Kammern 39 und 41 wird für eine ausreichende Versorgung der Innenverzahnung 23 mit Hydraulikfluid, eine entsprechende Verteilung von Hydraulikfluid in der Hilfsgerätegetriebewelle 20 und eine Abführung von Hydraulikfluid aus der Hilfsgerätegetriebewelle 20 gesorgt.

In der Hilfsgerätegetriebewelle 20 befindliches Hydraulikfluid kann durch das Vorsehen von nicht näher ersichtlichen Bohrungen in der Hilfsgerätegetriebewelle 20 auch zur Schmierung von im Bereich der Hilfsgerätegetriebewelle 20 vorgesehenen Lagern 46, 47 dienen.

In Fig. 3 ist ein Ausführungsbeispiel einer Hilfsgerätegetriebewelle 50 gezeigt, welche zur Anbindung von zwei Hilfsgeräten ausgebildet ist. Die Hilfsgerätegetriebewelle 50 ist weitestgehend identisch zu der Hilfsgerätegetriebewelle 20 aufgebaut. Allerdings weist die Hilfsgerätegetriebewelle 50 in einem zweiten Endbereich 51 keine Wand 42 des Gehäuses 18, sondern eine weitere Innenverzahnung 52 auf, über welche die Hilfsgerätegetriebewelle 50 mit einem weiteren Hilfsgerät 14 gekoppelt werden kann. Der zweite Endbereich 51 ist im Wesentlichen vergleichbar zu dem ersten Endbereich 22 ausgebildet.

Zur Schmierung der weiteren Innenverzahnung 52 mit Hydraulikfluid ist eine weitere Leiteinrichtung 53 vorgesehen, welche Hydraulikfluid zu einer weiteren in einer weiteren umlaufenden Nut 55 angeordneten Öffnung 54 in der Hilfsgerätegetriebewelle 50 leitet. Durch die Öffnung 54 in die Hilfsgerätegetriebewelle 50 geleitetes Hydraulikfluid wird von einer weiteren Hydraulikfluidführungseinrichtung 56 in eine dritte Kammer 57 der Hilfsgerätegetriebeeinrichtung 50 geführt.

Die Elemente 51 bis 57 zur Anordnung des weiteren Hilfsgeräts mit der Hilfsgerätegetriebewelle 50 sind im Wesentlichen bau- und funktionsgleich und spiegelbildlich zu den entsprechenden Elementen zur Anordnung des Hilfsgeräts im ersten Endbereich 22 der Hilfsgerätegetriebewelle 50 ausgebildet, wobei eine zweite Kammer 58 der Hilfsgerätegetriebewelle 50 einerseits von der Hydraulikfluidführungseinrichtung 30 und andererseits von der weiteren Hydraulikfluidführungseinrichtung 56 begrenzt wird. Dementsprechend kann sowohl von der ersten Kammer 39 in die zweite Kammer 58 als auch von der dritten Kammer 57 in die zweite Kammer 58 geleitetes Hydraulikfluid über eine in der zweiten Kammer 58 angeordnete Auslassbohrung 59 aus der Hilfsgerätegetriebewelle 50 abgeführt werden.

### Bezugszeichenliste

- 1: Strahltriebwerk
- 2: Nebenstromkanal
- 3: Einlaufbereich
- 4: Bläser
- 5: Triebwerkskern
- 6: Verdichtereinrichtung
- 7: Brenner
- 8: Niederdruckturbine
- 9: Hochdruckturbine
- 10: Hilfsgerätegetriebevorrichtung
- 11: Antriebswelle
- 12: Triebwerkswelle
- 13: Zahnradpaarung
- 14: Hilfsgerät
- 15: Kegelradverzahnung
- 16: Hilfsgerätegetriebewelle
- 17: Zahnrad
- 18: Gehäuse
- 20: Hilfsgerätegetriebewelle
- 21: Zahnrad
- 22: erster Endbereich der Hilfsgerätegetriebewelle
- 23: Innenverzahnung
- 24: Dichteinrichtung
- 25: Leiteinrichtung
- 26: Nut
- 27: Wand des Gehäuses
- 28: Öffnung
- 29: Spitze der Leiteinrichtung
- 30: Hydraulikfluidführungseinrichtung
- 31: Schenkel
- 32: Schenkel
- 33: Mittelachse
- 34: erste Begrenzungswand
- 35: zweite Begrenzungswand
- 36: zweiter Endbereich der Hilfsgerätegetriebewelle
- 37: Innenwand
- 38: Durchlassöffnung
- 39: erste Kammer der Hilfsgerätegetriebewelle
- 40: Abtropfkante
- 41: zweite Kammer der Hilfsgerätegetriebewelle
- 42: Gehäuseelement
- 43: Innenwand
- 44: Durchtrittsöffnung
- 45: Austrittsbohrung
- 46: Lager
- 47: Lager
- 50: Hilfsgerätegetriebewelle
- 51: zweiter Endbereich der Hilfsgerätegetriebewelle
- 52: weitere Innenverzahnung
- 53: weitere Leiteinrichtung
- 54: weitere Öffnung
- 55: weitere Nut
- 56: weitere Hydraulikfluidführungseinrichtung
- 57: dritte Kammer
- 58: zweite Kammer
- 59: Auslassbohrung

## Patentansprüche

1. Hilfsgerätegetriebevorrichtung (10) mit einer in ein Gehäuse (18) eingebundenen Welle (16, 20, 50), welche zumindest in einem seitlichen Endbereich (22, 51) mit einem Hilfsgerät (14) verbindbar ist, wobei die Welle (16, 20, 50) zumindest in dem seitlichen Endbereich (22, 51) als Hohlwelle mit einer Innenverzahnung (23, 52) ausgebildet ist und zur Schmierung der Innenverzahnung (23, 52) im Bereich des Gehäuses (18) wenigstens eine Leiteinrichtung (25, 53) vorgesehen ist, welche zur Führung von im Bereich des Gehäuses (18) vorliegendem Hydraulikfluid unter Einwirkung von Schwerkraft in Richtung wenigstens einer in der Welle (16, 20, 50) vorgesehenen Öffnung (28, 54) ausgebildet ist, **dadurch gekennzeichnet, dass** die Welle (50) an einem mit dem Hilfsgerät (14) koppelbaren seitlichen Endbereich (22) abgewandten seitlichen Endbereich (51) eine weitere Innenverzahnung (52) aufweist, über welche die Welle (50) mit einem weiteren Hilfsgerät koppelbar ist.

2. Hilfsgerätegetriebevorrichtung nach Anspruch 1, **dadurch gekennzeichnet, dass** die wenigstens eine Leiteinrichtung (25, 53) integral mit dem Gehäuse (18) ausgebildet ist.

3. Hilfsgerätegetriebevorrichtung nach einem der Ansprüche 1 oder 2, **dadurch gekennzeichnet, dass** die wenigstens eine Leiteinrichtung (25, 53) als eine in das Gehäuse (18) integrierte Rinne ausgebildet ist.

4. Hilfsgerätegetriebevorrichtung nach einem der Ansprüche 1 bis 3, **dadurch gekennzeichnet, dass** die wenigstens eine Öffnung (28, 54) in einer in radialer Richtung umlaufenden Nut (26, 55) der Welle (16, 20, 50) angeordnet ist.

5. Hilfsgerätegetriebevorrichtung nach einem der Ansprüche 1 bis 4, **dadurch gekennzeichnet, dass** im Bereich der Leiteinrichtung (25, 53) ein zur Aufnahme von Hydraulikfluid vorgesehener Behälter angeordnet ist, welcher in mit Hydraulikfluid gefülltem Zustand zur insbesondere kontinuierlichen Abgabe von Hydraulikfluid an die wenigstens eine Leiteinrichtung (25, 53) ausgebildet ist.

6. Hilfsgerätegetriebevorrichtung nach einem der Ansprüche 1 bis 5, **dadurch gekennzeichnet, dass** die wenigstens eine Öffnung (28, 54) zur Führung von Hydraulikfluid in eine erste Kammer (39 bzw. 57) der Welle (16, 20, 50) ausgebildet ist, welche wiederum zur Führung von Hydraulikfluid im Betrieb der Welle (16, 20, 50) in Richtung der Innenverzahnung (23, 52) ausgebildet ist.

7. Hilfsgerätegetriebevorrichtung nach Anspruch 6, **dadurch gekennzeichnet, dass** die erste Kammer (39 bzw. 57) in eingebautem Zustand des Hilfsgeräts (14) einerseits von dem Hilfsgerät (14) und/oder einer Dichtungseinrichtung (24) und andererseits zumindest bereichsweise von einer Hydraulikfluidführungseinrichtung (30, 56) begrenzt ist.

8. Hilfsgerätegetriebevorrichtung nach einem der Ansprüche 1 bis 7, **dadurch gekennzeichnet, dass** eine Hydraulikfluidführungseinrichtung (30, 56) zur Führung des Hydraulikfluids von der Öffnung (28, 54) in eine erste Kammer (39 bzw. 57) der Welle (16, 20, 50) ausgebildet ist.

9. Hilfsgerätegetriebevorrichtung nach einem der Ansprüche 7 oder 8, **dadurch gekennzeichnet, dass** die Hydraulikfluidführungseinrichtung (30, 56) in der Art eines zumindest im Bereich der Öffnung (28, 54) offenen hohlen Rings ausgebildet ist, wobei eine einer Mittelachse (33) der Welle (16, 20, 50) zugewandte Fläche (37) der Hydraulikfluidführungseinrichtung (30, 56) in Richtung der ersten Kammer (39 bzw. 57) in Richtung der Mittelachse (33) der Welle (16, 20, 50) geneigt ist und die Hydraulikfluidführungseinrichtung (30, 56) in einem der ersten Kammer (39 bzw. 57) zugewandten Bereich eine Durchlassöffnung (38) für das Hydraulikfluid aufweist.

10. Hilfsgerätegetriebevorrichtung nach einem der Ansprüche 7 bis 9, **dadurch gekennzeichnet, dass** die Hydraulikfluidführungseinrichtung (30, 56) wenigstens eine Durchlassöffnung (38) aufweist, welche zur Führung von Hydraulikfluid von der ersten Kammer (39 bzw. 57) in eine zweite Kammer (41, 58) der Welle (16, 20, 50) ausgebildet ist, wenn eine in der ersten Kammer (30 bzw. 56) befindliche Hydraulikfluidmenge bei stillstehender Welle (16, 20, 50) eine bestimmte Hydraulikfluidgrenzmenge überschreitet.

11. Hilfsgerätegetriebevorrichtung nach Anspruch 10, **dadurch gekennzeichnet, dass** im Bereich der zweiten Kammer (41, 58) wenigstens eine Hydraulikfluidauslassöffnung (45, 59) vorgesehen ist, über welche Hydraulikfluid aus der Welle (16, 20, 50) abführbar ist.

12. Hilfsgerätegetriebevorrichtung nach einem der Ansprüche 1 bis 11, **dadurch gekennzeichnet, dass** zur Schmierung der weiteren Innenverzahnung (52) eine weitere Leiteinrichtung (53) vorgesehen ist, welche im Bereich des Gehäuses (18) vorliegendes Hydraulikfluid unter Einwirkung von Schwerkraft in Richtung wenigstens einer weiteren in der Welle (50) vorgesehenen Öffnung (54) führt.

13. Hilfsgerätegetriebevorrichtung nach Anspruch 12, **dadurch gekennzeichnet, dass** wenigstens eine weitere Hydraulikfluidführungseinrichtung (56) vorgesehen ist, über welche Hydraulikfluid von der weiteren Öffnung (54) in der Welle (50) in eine dritte Kammer (57) der Welle (50) führbar ist.

14. Hilfsgerätegetriebevorrichtung nach Anspruch 13, **dadurch gekennzeichnet, dass** die weitere Hydraulikfluidführungseinrichtung (56) wenigstens eine weitere Durchlassöffnung aufweist, welche zur Führung von Hydraulikfluid von der dritten Kammer (57) in die in einem der dritten Kammer (57) abgewandten Bereich der weiteren Hydraulikfluidführungseinrichtung (56) vorgesehene zweite Kammer (58) der Welle (50) ausgebildet ist, wenn eine in der dritten Kammer (57) befindliche Hydraulikfluidmenge bei stillstehender Welle (50) eine bestimmte Hydraulikfluidgrenzmenge überschreitet.

## Claims

1. Auxiliary device gear appliance (10), comprising a shaft (16, 20, 50) that is integrated into a housing (18) and that can be connected to an auxiliary device (14) at least in a lateral end area (22, 51), wherein in at least a lateral end area (22, 51) the shaft (16, 20, 50) is configured as a hollow shaft with an internal gearing (23, 52) and at least one guiding appliance (25, 53) is provided for lubricating the internal gearing (23, 52) in the area of the housing (18), with the guiding appliance (25, 53) being configured so as to guide hydraulic fluid, which is present in the area of the housing (18), under the influence of gravity in the direction of at least one opening (28, 54) that is provided in the shaft (16, 20, 50), **characterized in that** the shaft (50) has another internal gearing (52) by which the shaft (50) can be coupled to another auxiliary device at a lateral end area (51) that is facing away from the lateral end area (22) via which the shaft (50) can be coupled to the auxiliary device (14).

2. Auxiliary device gear appliance according to claim 1, **characterized in that** the at least one guiding appliance (25, 53) is configured so as to be an integral part of the housing (18).

3. Auxiliary device gear appliance according to one of the claims 1 or 2, **characterized in that** the at least one guiding appliance (25, 53) is configured as a chute that is integrated into the housing (18).

4. Auxiliary device gear appliance according to one of the claims 1 to 3, **characterized in that** the at least one opening (28, 54) is arranged inside a groove (26, 55) of the shaft (16, 20, 50) that extends circumferentially in the radial direction.

5. Auxiliary device gear appliance according to one of the claims 1 to 4, **characterized in that** in the area of the guiding appliance (25, 53) a container that is provided for the reception of hydraulic fluid is arranged, which, when it is filled with hydraulic fluid, is configured in particular for the continuous release of hydraulic fluid to the at least one guiding appliance (25, 53).

6. Auxiliary device gear appliance according to one of the claims 1 to 5, **characterized in that** the at least one opening (28, 54) is configured for guiding hydraulic fluid into a first chamber (39 or 57) of the shaft (16, 20, 50) that is in turn configured for guiding hydraulic fluid in the direction of the internal gearing (23, 52) during operation of the shaft (16, 20, 50).

7. Auxiliary device gear appliance according claim 6, **characterized in that**, in the built-in state of the auxiliary device (14), the first chamber (39 or 57) is limited on the one side by the auxiliary device (14) and/or a sealing device (24) and on the other side at least in certain areas by a hydraulic fluid guiding appliance (30, 56).

8. Auxiliary device gear appliance according to one of claims 1 to 7, **characterized in that** a hydraulic fluid guiding appliance (30, 56) is configured for guiding the hydraulic fluid from the opening (28, 54) into a first chamber (39 or 57) of the shaft (16, 20, 50).

9. Auxiliary device gear appliance according to one of claims 7 or 8, **characterized in that** the hydraulic fluid guiding appliance (30, 56) is configured in the manner of a hollow ring that is open at least in the area of the opening (28, 54), wherein a surface (37) of the hydraulic fluid guiding appliance (30, 56) that is facing towards a central axis (33) of the shaft (16, 20, 50) is tilted in the direction of the first chamber (39 or 57) in the direction of the central axis (33) of the shaft (16, 20, 50), and the hydraulic fluid guiding appliance (30, 56) has an outlet opening (38) for the hydraulic fluid in an area that is facing the first chamber (39 or 57).

10. Auxiliary device gear appliance according to one of claims 7 to 9, **characterized in that** the hydraulic fluid guiding appliance (30, 56) has at least one outlet opening (38), which is configured for guiding hydraulic fluid from the first chamber (39 or 57) into a second chamber (41, 58) of the shaft (16, 20, 50), if an amount of hydraulic fluid that is present in the first chamber (39 or 57) exceeds a certain threshold quantity of hydraulic fluid when the shaft (16, 20, 50) is standing still.

11. Auxiliary device gear appliance according to claim 10, **characterized in that** in the area of the second chamber (41, 58) at least one hydraulic fluid outlet opening (45, 59) is provided, through which hydraulic fluid can be discharged from the shaft (16, 20, 50).

12. Auxiliary device gear appliance according to one of the claims 1 to 11, **characterized in that** for the lubrication of the further internal gearing (52) another guiding appliance (53) is provided, which, under the influence of gravity, guides hydraulic fluid that is present in the area of the housing (18) in the direction of at least one other opening (54) that is provided in the shaft (50).

13. Auxiliary device gear appliance according to claim 12, **characterized in that** at least one other hydraulic fluid guiding appliance (56) is provided, through which hydraulic fluid can be guided from the further opening (54) in the shaft (50) into a third chamber (57) of the shaft (50).

14. Auxiliary device gear appliance according to claim 13, **characterized in that** the other hydraulic fluid guiding appliance (56) has at least one further outlet opening, which is configured for guiding hydraulic fluid from the third chamber (57) into the second chamber (58) of the shaft (50) that is provided in an area of the further hydraulic fluid guiding appliance (56) that is facing away from the third chamber (57), when an amount of hydraulic fluid present in the third chamber (57) exceeds a certain threshold quantity of hydraulic fluid when the shaft (50) is standing still.

## Revendications

1. Dispositif de transmission d'appareil auxiliaire (10) avec un arbre (16, 20, 50) engagé dans un boîtier (18) et pouvant être relié à un appareil auxiliaire (14) par au moins une extrémité latérale (22, 51), l'arbre (16, 20, 50) étant configuré au moins dans son extrémité latérale (22, 51) comme un arbre creux avec une denture interne (23, 52) et, à des fins de lubrification de la denture interne (23, 52), au moins un dispositif de guidage (25, 53) étant disposé dans la zone du boîtier (18) et configuré de façon à acheminer sous l'effet de la gravité le fluide hydraulique se trouvant dans la zone du boîtier (18) en direction d'au moins une ouverture (28, 54) dans l'arbre (16, 20, 50), **caractérisé en ce que** l'arbre (50) présente une autre denture interne (52) par laquelle l'arbre (50) peut être relié à un autre appareil auxiliaire sur une extrémité latérale (51) détournée de l'extrémité latérale (22) pouvant être relié à l'appareil auxiliaire (14).

2. Dispositif de transmission d'appareil auxiliaire selon la revendication 1, **caractérisé en ce que** l'au moins un dispositif de guidage (25, 53) est intégralement formé avec le boîtier (18).

3. Dispositif de transmission d'appareil auxiliaire selon l'une des revendications 1 ou 2, **caractérisé en ce que** l'au moins un dispositif de guidage (25, 53) est configuré comme un canal intégré au boîtier (18).

4. Dispositif de transmission d'appareil auxiliaire selon l'une des revendications 1 à 3, **caractérisé en ce que** l'au moins une ouverture (28, 54) est disposée dans une rainure (26, 55) de l'arbre (16, 20, 50) s'étendant de façon circulaire en direction radiale.

5. Dispositif de transmission d'appareil auxiliaire selon l'une des revendications 1 à 4, caractérisé en ce la zone du dispositif de guidage (25, 53) est munie d'un récipient devant servir à recueillir le fluide hydraulique et qui, lorsque rempli de fluide hydraulique, doit notamment servir à la distribution continuelle de fluide hydraulique à l'au moins un dispositif de guidage (25, 53).

6. Dispositif de transmission d'appareil auxiliaire selon l'une des revendications 1 à 5, **caractérisé en ce que** l'au moins une ouverture (28, 54) est configurée pour guider le fluide hydraulique dans une première chambre (39 ou 57) de l'arbre (16, 20, 50), qui est en retour configurée pour guider le fluide hydraulique vers la denture interne (23, 52) lorsque fonctionne l'arbre (16, 20, 50).

7. Dispositif de transmission d'appareil auxiliaire selon la revendication 6, **caractérisé en ce que** la première chambre (39 à 57) est bordée, lorsque l'appareil auxiliaire (14) est monté, d'un côté par l'appareil auxiliaire (14) et/ou un dispositif d'étanchéité (24) et de l'autre côté au moins partiellement par un dispositif de guidage du fluide hydraulique (30, 56).

8. Dispositif de transmission d'appareil auxiliaire selon l'une des revendications 1 à 7, **caractérisé en ce qu'**un dispositif de guidage du fluide hydraulique (30, 56) est configuré pour acheminer le fluide hydraulique de l'ouverture (28, 54) à une première chambre (39 ou 57) de l'arbre (16, 20, 50).

9. Dispositif de transmission d'appareil auxiliaire selon l'une des revendications 7 ou 8, **caractérisé en ce que** le dispositif de guidage du fluide hydraulique (30, 56) est configuré à la manière d'un anneau creux au moins dans la zone de l'ouverture (28, 54), une surface (37) du dispositif de guidage du fluide hydraulique (30, 56) faisant face à l'axe moyen (33) de l'arbre (16, 20, 50) étant inclinée en direction de la première chambre (39 ou 57) en direction de l'axe moyen (33) de l'arbre (16, 20, 50) et le dispositif de guidage du fluide hydraulique (30, 56) présentant un passage (38) pour le fluide hydraulique dans l'une des zones faisant face à la première chambre (39 ou 57).

10. Dispositif de transmission d'appareil auxiliaire selon l'une des revendications 7 à 9, **caractérisé en ce qu'**un dispositif de guidage du fluide hydraulique (30, 56) présente au moins un passage (38) configuré pour acheminer le fluide hydraulique de la première chambre (39 ou 57) à une deuxième chambre (41, 58) de l'arbre (16, 20, 50) si la quantité de fluide hydraulique se trouvant dans la première chambre (39 ou 57) dépasse une limite prédéterminée lorsque l'arbre (16, 20, 50) est immobile.

11. Dispositif de transmission d'appareil auxiliaire selon la revendication 10, **caractérisé en ce que** la zone de la deuxième chambre (41, 58) présente au moins une ouverture de passage du fluide hydraulique (45, 59) par laquelle le fluide hydraulique peut être évacué de l'arbre (16, 20, 50).

12. Dispositif de transmission d'appareil auxiliaire selon l'une des revendications 1 à 11, **caractérisé en ce qu'**à des fins de lubrification de l'autre denture interne (52), un autre dispositif de guidage (53) est prévu, qui dirige sous l'effet de la gravité le fluide hydraulique présent dans la zone du boîtier (18) en direction d'au moins une autre ouverture (54) pratiquée dans l'arbre (50).

13. Dispositif de transmission d'appareil auxiliaire selon la revendication 12, **caractérisé en ce qu'**au moins un autre dispositif de guidage du fluide hydraulique (56) est prévu, par laquelle le fluide hydraulique peut être acheminé de l'autre ouverture (54) dans l'arbre (50) à une troisième chambre (57) de l'arbre (50).

14. Dispositif de transmission d'appareil auxiliaire selon la revendication 12, **caractérisé en ce que** l'autre dispositif de guidage du fluide hydraulique (56) présente au moins une autre ouverture servant à acheminer le fluide hydraulique de la troisième chambre (57) à la deuxième chambre (58) de l'arbre (50) disposée dans une zone de l'autre dispositif de guidage du fluide hydraulique (56) détournée de la troisième chambre (57) si la quantité de fluide hydraulique dans la troisième chambre (57) dépasse une limite prédéterminée lorsque l'arbre (50) est immobile.
